# FASCICULE DE BREVET EUROPEEN

(11) **EP 3 032 159 B1**
(45) Date de publication et mention de la délivrance du brevet: **16.10.2019**
(21) Numéro de dépôt: 15199301.1
(22) Date de dépôt: 10.12.2015
(51) Int. Cl.: F16L 37/088

(54) **SYSTÈME DE CONNEXION FLUIDIQUE**
FLÜSSIGKEITENTHALTENDES VERBINDUNGSSYSTEM
FLUID CONNECTION SYSTEM

(30) Priorité: 11.12.2014 FR 1462286
(43) Date de publication de la demande: 15.06.2016
(73) Titulaire: Schrader, 25300 Pontarlier (FR)
(72) Inventeur: GRESSET, Benoit, 39600 ARBOIS (FR); ROBERT, Sébastien, 25000 BESANCON (FR)
(74) Mandataire: Novagraaf Technologies

(56) Documents cités:
- DE-A1- 2 028 711
- DE-A1-102005 011 751
- DE-A1-102006 002 565
- DE-U1- 8 624 767
- US-A- 3 753 582

## Description

### Domaine technique

La présente invention se rapporte à une douille pour une connexion fluidique rapide sur un embout, la douille et l'embout coopérant par encliquetage. Elle concerne également un système comprenant une telle douille et un embout.

### Etat de la technique

Dans bien des domaines, par exemple automobiles, industriels ou de la santé, il est utile de réaliser des raccordements fluidiques de manière temporaire, afin de relier une portion de circuit à une autre. Les fluides à conduire peuvent être très divers, comme par exemple des gaz tels que de l'oxygène, de l'azote, de l'air comprimé, du gaz carbonique ou des gaz rares, ou des liquides tels que par exemple de l'eau, du carburant ou de l'huile.

On connait par exemple par le document WO 90/10814 un système de connexion fluidique comportant un embout mâle et une douille femelle apte à se raccorder de manière étanche sur l'embout par une translation selon un axe de la douille. L'étanchéité entre l'embout et la douille est réalisée par un joint torique logé dans une gorge circulaire à l'extrémité de l'embout et destiné à venir en contact avec un logement cylindrique de la douille. Le système comporte en outre des moyens de retenue pour maintenir la douille sur l'embout par encliquetage. Pour cela, les moyens de retenue comportent un épaulement réalisé sur l'embout, un élément de retenue porté par la douille et apte à se loger contre l'épaulement de manière à faire obstacle à l'extraction de la douille hors de l'embout. Le mouvement de l'élément de retenue est radial. Celui-ci a une forme de bague et comporte une lame s'appuyant sur le corps de la douille de manière élastique et tendant à faire coulisser l'élément de retenue. Des moyens de déverrouillage pour libérer la douille de l'embout en dégageant l'élément de retenue hors de l'épaulement sont prévus sous la forme d'une surface d'appui sur l'élément de retenue pour le doigt d'un opérateur. Il est nécessaire d'appuyer également sur la surface d'appui pour permettre l'insertion de la douille sur l'embout afin de dégager la totalité du logement cylindrique.

On constate qu'une telle douille pose certains problèmes. En effet, il est nécessaire d'appuyer sur les moyens de déverrouillage pendant la phase de l'insertion, ce qui complique la manoeuvre. Par ailleurs, la force de retenue est moyenne et on a pu constater le dégagement de l'élément de retenue hors de l'épaulement, en particulier si l'épaulement ou l'élément de retenue sont usés. De plus, l'épaulement est nécessairement dans un plan radial, ce qui a tendance à fragiliser l'embout et à générer une arête agressive.

Le document DE2028711 décrit un système de connexion fluidique selon le préambule de la revendication 1.L'invention vise à fournir une douille et un système de douille et d'embout permettant une bonne retenue de la douille sur l'embout et qui soit simple à mettre en oeuvre et à fabriquer.

### Description de l'invention

Avec ces objectifs en vue, l'invention a pour objet un système de connexion fluidique selon la revendication 1.

Grâce à l'invention la manoeuvre de connexion de la douille sur l'embout est facilitée. En effet, lorsque la broche vient en appui sur l'extrémité de l'embout, elle recule le long de la face d'appui et, de ce fait, s'éloigne de l'axe de la douille. Elle dégage alors le passage pour que l'embout et la douille s'engagent. Ensuite, lorsque la broche arrive au niveau de l'épaulement, elle se place contre, sous l'effet des moyens de rappel élastique. La mise en place de la douille sur l'embout ne nécessite pas de manoeuvre particulière, l'introduction de la douille sur l'embout étant suffisante pour obtenir la mise en place des moyens de retenue.

La douille comporte une face d'ouverture de l'entaille, faisant face à la face d'appui, et l'épaulement est conique, l'angle entre l'axe de l'embout et l'épaulement étant supérieur à l'angle entre l'axe de douille et la face d'ouverture. On entend par l'angle entre l'épaulement et l'axe l'angle que fait une génératrice du cône de l'épaulement avec l'axe. Dans le cas de l'anneau plat, cet angle est droit. Grâce à cette disposition, la broche prise entre l'épaulement et la surface d'ouverture a tendance à être poussée en direction de l'axe de l'embout contre l'embout lorsque la douille est tirée hors de l'embout. Il est donc impossible que la broche se dégage naturellement de sa position contre l'épaulement.

Selon une disposition, l'épaulement est issu d'une gorge circulaire dans laquelle la broche est logée en position de verrouillage.

Selon un autre perfectionnement, l'embout comporte une surface d'entrée de forme conique ou en anneau plat pour écarter la broche lors de l'insertion de la douille sur l'embout, la face d'appui étant sensiblement perpendiculaire à une génératrice de la surface d'entrée dans un plan axial perpendiculaire à la face d'appui. L'introduction de la douille sur l'embout en est encore facilitée.

La douille comporte une face d'ouverture de l'entaille, faisant face à la face d'appui. Ainsi, la broche est guidée par la face d'ouverture lorsqu'on écarte la broche de l'axe.

De manière particulière, la face d'ouverture est sensiblement parallèle à la face d'appui. Ainsi, la broche est guidée dans l'espace défini entre les faces d'appui et d'ouverture. Du fait de l'inclinaison de la face d'ouverture, la broche est guidée avec une trajectoire engageante, c'est-à-dire qu'elle aura tendance à se rapprocher de l'axe de la douille sous l'effet d'une traction sur la douille pour l'extraire de l'embout. Ceci est vrai, même si l'épaulement est conique, tant que l'angle entre l'axe et l'épaulement est supérieur à l'angle entre l'axe de douille et la face d'ouverture. On peut donc, grâce à l'invention, prévoir un épaulement conique qui est moins fragile et moins agressif.

Selon une disposition constructive, les moyens de déverrouillage sont formés par la face d'ouverture et par un levier prolongeant la broche et faisant saillie de la douille pour être préhensible. Le levier permet en particulier d'écarter la broche contre la face d'ouverture et de la faire ainsi s'éloigner de l'axe de la douille pour qu'elle libère l'épaulement.

Selon un perfectionnement, le levier s'étend dans une direction parallèle à l'axe de la douille le long de celle-ci et limite le déplacement axial de la broche en prenant appui sur l'extérieur de la douille. Le levier permet de retenir la broche dans un sens à l'encontre d'un glissement selon son axe. Son orientation facilite l'écartement pour la manoeuvre de dégagement.

De manière complémentaire, les moyens de déverrouillage comportent une rampe le long de la face d'ouverture en regard du levier disposée de telle sorte qu'une traction sur la broche à l'opposé du levier provoque le glissement du levier sur la rampe et l'éloignement de la broche par rapport à l'axe de la douille. On dispose ainsi d'autres moyens pour obtenir le déverrouillage de la douille, en exerçant une traction sur la broche.

Selon une disposition avantageuse, l'élément de retenue comporte deux broches, les moyens de rappel élastique étant formés par une boucle issue d'un même fil que les broches et reliant les broches entre elles, de telle sorte que l'élément de retenue forme une pince. L'élément de retenue est réalisé par un seul fil et intègre, par sa forme et ses propriétés, les moyens de rappel élastique. La douille est donc très simple à fabriquer, puisqu'elle ne comporte que deux pièces. La présence de deux broches permet en outre d'équilibrer les forces de part et d'autre de l'axe de douille à la fois pendant l'insertion de la douille, en position de verrouillage et pendant le déverrouillage.

Selon une caractéristique complémentaire, la boucle s'étend dans un plan parallèle à l'axe de la douille. Son encombrement radial est ainsi limité. De plus, elle offre une prise pour exercer une traction sur les broches, ce qui, combiné avec les rampes et les leviers, permet d'obtenir le déverrouillage de la douille.

Selon un perfectionnement, la douille comporte deux faces de montage formant un vé apte à provoquer l'écartement l'une de l'autre des broches lors du montage de l'élément de retenue par glissement contre les faces de montage dans une direction parallèle à l'axe de la douille.

### Brève description des figures

L'invention sera mieux comprise et d'autres particularités et avantages apparaîtront à la lecture de la description qui va suivre, la description faisant référence aux dessins annexés parmi lesquels :

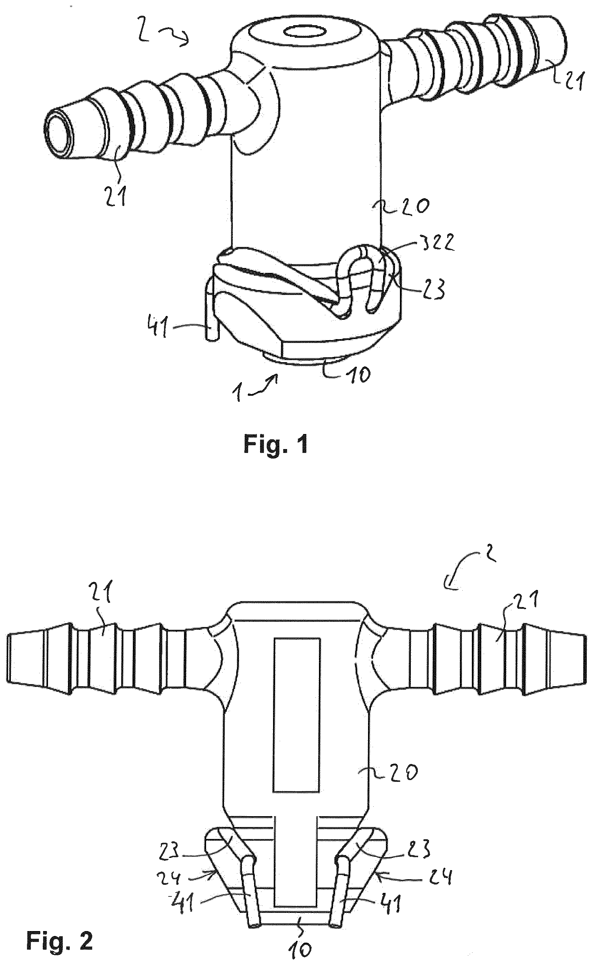

- la figure 1 est une vue en perspective d'un système de connexion fluidique selon un mode de réalisation de l'invention ;
- la figure 2 est une vue de face du système de la figure 1 ;

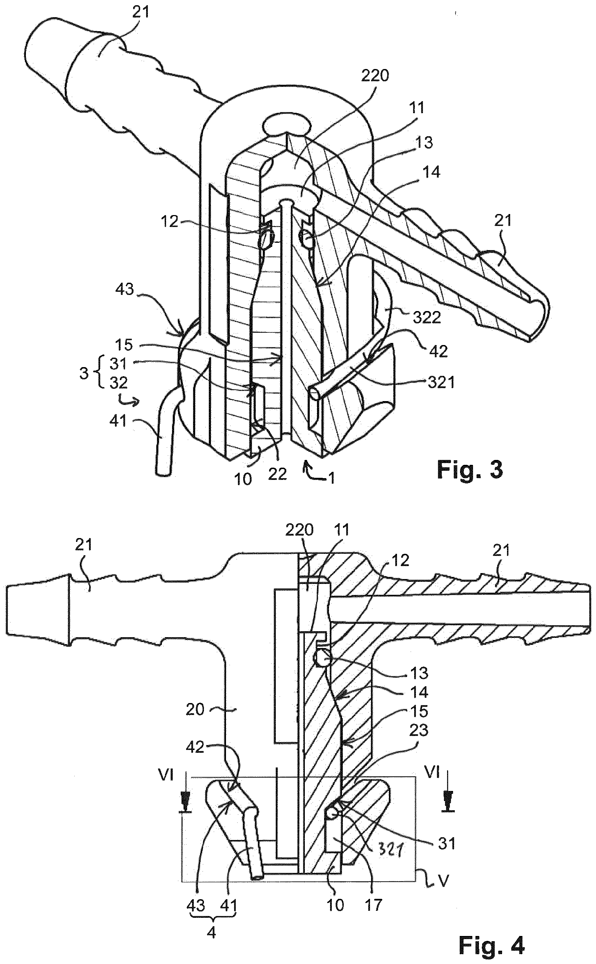

- la figure 3 est une vue en écorché, similaire à la figure 1.
- la figure 4 est une vue en écorché, similaire à la figure 2 ;
- la figure 5 une vue du détail V de la figure 4 ;
- la figure 6 est une vue en coupe selon la ligne VI-VI de la figure 4.

### DESCRIPTION DETAILLEE

Un système de connexion fluidique conforme à un premier mode de réalisation de l'invention comporte un embout 1 mâle et une douille 2 femelle apte à se raccorder de manière étanche sur l'embout 1 par une translation selon un axe de la douille 2.

L'embout 1 a une forme de révolution tubulaire et est destiné à être connecté à une portion de circuit, non représentée, par une embase 10. A une extrémité 11 de l'embout 1 opposée à l'embase 10, celui-ci comporte un chanfrein, une gorge circulaire 12 dans laquelle est logé un joint torique 13, suivie par une surface d'entrée 14 de forme conique correspondant à une augmentation de diamètre, une portion cylindrique 15 puis un épaulement 31 de forme également conique mais correspond à une réduction de diamètre depuis la portion cylindrique 15. Un fond d'une gorge circulaire 17 relie l'épaulement 31 à l'embase 10. L'embout 1 est percé selon son axe de part en part entre l'embase 10 et l'extrémité 11.

La douille 2 comporte un corps 20 de forme générale cylindrique duquel s'étendent deux tubes de raccord 21 de manière radiale pour y raccorder d'autres portions de circuit. Cependant, on peut prévoir que la douille 2 ait un seul tube de raccord, dans une direction quelconque, ou plus de deux. On peut prévoir également d'autres moyens de connexion fixes pour les autres portions de circuit. La douille 2 peut également simplement embarquer un capteur pour mesurer différentes grandeurs concernant le fluide telles que la température, la pression ou la composition, avec ou sans tube de raccord. La douille 2 comporte un logement 22 de forme de révolution s'étendant dans le corps 20 selon un axe de douille 2 et apte à recevoir l'embout 1 au niveau de son débouché 210. Le logement 22 est en communication fluidique avec les tubes de raccord 21. Le logement 22 comporte une chambre 220 cylindrique dans laquelle les tubes de raccord 21 débouchent et avec laquelle le joint torique 13 coopère pour réaliser une étanchéité entre la chambre 220 et l'extérieur.

Le système de connexion comporte des moyens de retenue 3 pour se maintenir sur l'embout 1 par encliquetage. Les moyens de retenue 3 comportent l'épaulement 31 réalisé sur l'embout 1 et un élément de retenue 32 porté par la douille 2. L'élément de retenue 32 est un fil d'acier à ressort conformé de la manière suivante : il comporte deux broches 321 droites dans un même plan et reliées entre elles par une boucle 322 faisant saillie dudit plan, sensiblement à angle droit. A l'opposé de la boucle 322, les broches 321 se prolongent chacune par un levier 41 s'étendant parallèlement l'un à l'autre et perpendiculairement audit plan, d'un côté opposé à la boucle 322. Ainsi, l'élément de retenue 32 forme une pince, la boucle 322 étant une articulation permettant d'éloigner ou de rapprocher les deux broches 321.

Le corps 20 de la douille 2 comporte deux entailles 23 obliques débouchant dans le logement 22. Chaque entaille 23 est délimitée par une face d'ouverture 231 et une face d'appui 42 parallèles entre elles et suffisamment espacées pour que les broches 321 y passent. Les entailles 23 sont orientées de telle sorte qu'en suivant les faces d'appui 42 ou d'ouverture 231, on s'éloigne de l'axe en s'éloignant du débouché 210. L'élément de retenue 32 est monté sur la douille 2 de telle sorte que les broches 321 sont logées dans les entailles 23, les leviers 41 longent le corps 20 en direction du débouché 210 et la boucle 322 longe le corps 20 à l'opposé des leviers 41. La boucle 322 tend à rapprocher les broches 321 de telle sorte qu'elles tendent à venir au plus profond des entailles 23, en faisant saillie à l'intérieur du logement 22.

La douille 2 comporte sur son corps 20 deux faces de montage 24 formant un vé du côté du débouché 210 du logement 22 aptes à provoquer l'écartement l'une de l'autre des broches 321 lors du montage de l'élément de retenue 32 par glissement contre les faces de montage 24 dans une direction parallèle à l'axe de la douille 2.

Le système de connexion a une position de verrouillage dans laquelle l'embout 1 est dans le logement 22 et les broches 321 logées dans les entailles 23 se logent également contre l'épaulement 31 de manière à faire obstacle à l'extraction de la douille 2 hors de l'embout 1.

Le système comporte des moyens de déverrouillage 4 pour libérer la douille 2 de l'embout 1 en dégageant l'élément de retenue 32 hors de l'épaulement 31. Les moyens de déverrouillage 4 sont formés par les faces d'appui 42 et par les leviers 41. En effet les leviers 41 sont préhensibles et en les écartant, on dégage les broches 321 de l'épaulement 31, ce qui libère la douille 2 de l'embout 1. En complément, les moyens de déverrouillage 4 comportent une rampe 43 le long de la face d'appui 42 en raccordement avec la surface extérieure du corps 20, en regard du levier 41, disposée de telle sorte qu'une traction sur la broche 321 par la boucle 322 provoque le glissement du levier 41 sur la rampe 43 et l'éloignement de la broche 321 par rapport à l'axe de la douille 2. On obtient également ainsi le déverrouillage de la douille 2.

Lors de l'utilisation du système de connexion, on introduit l'embout 1 dans le logement 22 de la douille 2. Le joint torique 13 passe entre les broches 321. La surface d'entrée 14 vient contre les broches 321 et les écarte à l'encontre de la boucle 322. Les broches 321 glissent sur la partie cylindrique puis se referment en prenant appui sur l'épaulement 31.

Il est à noter que la surface d'entrée 14 n'est pas nécessaire. Si l'extrémité de l'embout 1 était droite et d'un diamètre constant, dans un mode de réalisation non représenté, l'embout 1 repousserait les broches 321 lors de son introduction dans le logement 22 et celles-ci glisseraient contre les faces d'ouverture, ce qui les écarterait de l'axe de la douille 2 et libérerait le passage pour l'embout 1.

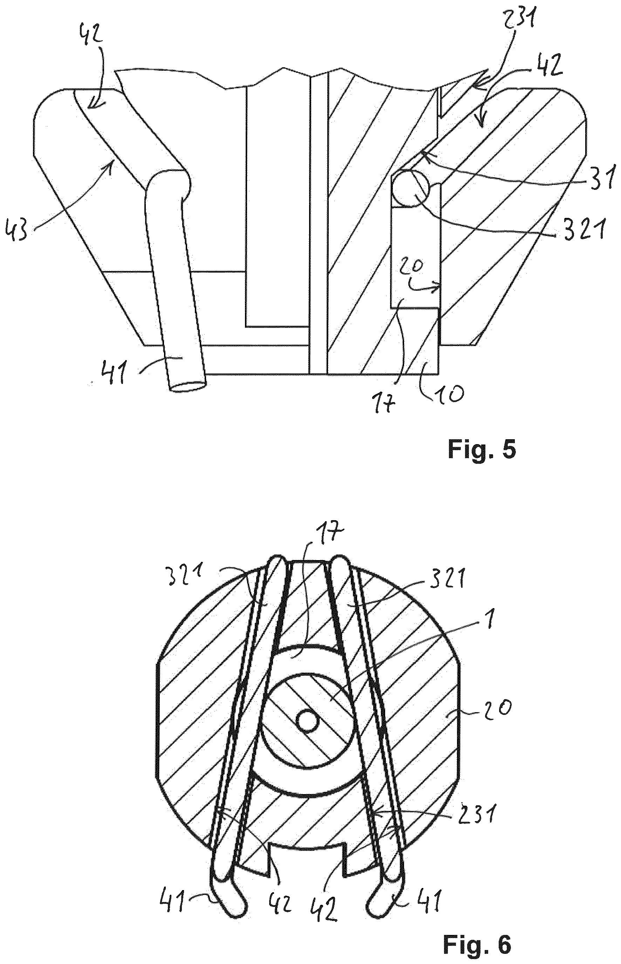

Si on tente une extraction de la douille 2 hors de l'embout 1, les broches 321 font obstacle en prenant appui d'une part sur l'épaulement 31 et d'autre part sur la face d'appui 42. Comme on peut le voir en particulier sur la figure 6, l'angle entre l'axe de l'embout 1 et l'épaulement 31 est supérieur à l'angle entre l'axe de douille 2 et la face d'appui 42. Ainsi, les broches 321 ont tendance à se rapprocher de l'axe, ce qui garantit une absence de déverrouillage accidentel.

Pour obtenir le déverrouillage, on peut écarter manuellement ou avec un outil les deux leviers 41. Les broches 321 prennent alors appui contre la face d'appui 42 et remontent dans les entailles 23, de manière à libérer l'épaulement 31. De manière alternative, on peut exercer une traction sur la boucle 322 de manière radiale par rapport à la douille 2. Les leviers 41 prennent alors appui sur les rampes 43 et entraînent les broches 321 dans les entailles 23 de manière à libérer également l'épaulement 31.

La douille 2 et l'embout 1 peuvent être en métal tel que du laiton, de l'acier inoxydable ou non, ou en matière synthétique moulée. L'élément de retenue 32 peut aussi être en matière synthétique ou en métal suffisamment élastique.

L'invention n'est pas limitée au mode de réalisation qui vient d'être décrit à titre d'exemple. L'élément de retenue pourrait ne comporter qu'une broche en prenant appui que le corps de la douille. La face d'ouverture pourrait ne pas être parallèle à la face d'appui, tant qu'elle n'est pas moins inclinée que l'épaulement.

## Revendications

1. Système de connexion fluidique comportant un embout (1) mâle et une douille (2) femelle apte à se raccorder de manière étanche sur l'embout (1) par une translation selon un axe de la douille (2), le système comportant des moyens de retenue (3) pour maintenir la douille (2) sur l'embout (1) par encliquetage, les moyens de retenue (3) comportant un épaulement (31) réalisé sur l'embout (1), un élément de retenue (32) porté par la douille (2) et apte à se loger contre l'épaulement (31) de manière à faire obstacle à l'extraction de la douille (2) hors de l'embout (1) dans une position de verrouillage, et des moyens de déverrouillage (4) pour libérer la douille (2) de l'embout (1) en dégageant l'élément de retenue (32) hors de l'épaulement (31), l'élément de retenue (32) comportant au moins une broche (321) s'étendant dans une direction perpendiculaire à l'axe de la douille (2) dans une entaille (23) de la douille (2) présentant une face d'ouverture (231) inclinée par rapport à l'axe de la douille (2) dans un sens tel que la broche (321), glissant sur la face d' ouverture (231), s'éloigne de l'extrémité avant de la douille (2) en s'éloignant de l'axe de la douille (2), la broche (321) étant apte à se loger contre l'épaulement (31) de l'embout (1), l'élément de retenue (32) comportant en outre des moyens de rappel élastique (322) de la broche (321) tendant à rapprocher la broche (321) de l'axe de la douille (2) **caractérisé en ce que** la douille (2) comporte une face d' appui (42) de l'entaille (23), faisant face à la face d' ouverture (231) et dans lequel l'épaulement (31) est conique et forme un angle avec l'axe de l'embout (1) supérieur à l'angle entre l'axe de douille (2) et la face d' appui (42), l'axe de l'embout (1) et celui de la douille (2) étant confondus.

2. Système selon la revendication 1, dans lequel l'épaulement (31) est issu d'une gorge circulaire (17) dans laquelle la broche (321) est logée en position de verrouillage.

3. Système selon l'une des revendications 1 à 2, dans lequel l'embout (1) comporte une surface d'entrée (14) de forme conique ou en anneau plat pour écarter la broche (321) lors de l'insertion de la douille (2) sur l'embout (1), la face d' ouverture (231) étant sensiblement perpendiculaire à une génératrice de la surface d'entrée (14) dans un plan axial perpendiculaire à la face d' ouverture (231).

4. Système selon l'une des revendications 1 à 3, dans lequelle la face d'appui (42) est sensiblement parallèle à la face d' ouverture (231).

5. Système selon la revendication 4, dans lequelle les moyens de déverrouillage (4) sont formés par la face d'appui (42) et par un levier (41) prolongeant la broche (321) et faisant saillie de la douille (2) pour être préhensible.

6. Système selon la revendication 5, dans lequelle le levier (41) s'étend dans une direction parallèle à l'axe de la douille (2) le long de celle-ci et limite le déplacement axial de la broche (321) en prenant appui sur l'extérieur de la douille (2).

7. Système selon la revendication 5 ou 6, dans lequelle les moyens de déverrouillage (4) comportent une rampe (43) le long de la face d'appui (42) en regard du levier (41) disposée de telle sorte qu'une traction sur la broche (321) à l'opposé du levier (41) provoque le glissement du levier (41) sur la rampe (43) et l'éloignement de la broche (321) par rapport à l'axe de la douille (2).

8. Système selon l'une des revendications 1 à 7, dans lequelle l'élément de retenue (32) comporte deux broches (321), les moyens de rappel élastique étant formés par une boucle (322) issue d'un même fil que les broches (321) et reliant les broches (321) entre elles, de telle sorte que l'élément de retenue (32) forme une pince.

9. Système selon la revendication 8, dans lequelle la boucle (322) s'étend dans un plan parallèle à l'axe de la douille (2).

## Patentansprüche

1. Fluidverbindungssystem, umfassend ein männliches Endstück (1) und eine weibliche Fassung (2), die sich durch eine Translation entlang einer Achse der Fassung (2) dicht an das Endstück (1) anschließen kann, wobei das System Haltemittel (3) umfasst, um die Fassung (2) durch Verrasten am Endstück (1) festzuhalten, wobei die Haltemittel (3) eine am Endstück (1) ausgeführte Schulter (31), ein Halteelement (32), das von der Fassung (2) getragen wird und sich gegen die Schulter (31) legen kann, um in einer Verriegelungsstellung ein Hindernis gegen das Abziehen der Fassung (2) aus dem Endstück (1) zu bilden, und Entriegelungsmittel (4) umfasst, um durch Lösen des Halteelements (32) aus der Schulter (31) die Fassung (2) vom Endstück (1) zu befreien, wobei das Halteelement (32) mindestens einen Stift (321) umfasst, der sich in eine Richtung senkrecht zur Achse der Fassung (2) in einer Kerbe (23) der Fassung (2) erstreckt, die eine Öffnungsseite (231) aufweist, welche in Bezug auf die Achse der Fassung (2) derart in einer Richtung geneigt ist, dass sich der Stift (321), wenn er an der Öffnungsseite (231) gleitet, sich unter Entfernen von der Achse der Fassung (2) vom vorderen Ende der Fassung (2) entfernt, wobei sich der Stift (321) gegen die Schulter (31) des Endstücks (1) legen kann, wobei das Halteelement (32) weiter elastische Rückstellmittel (322) des Stifts (321) umfasst, die dazu tendieren, den Stift (321) der Achse der Fassung (2) anzunähern, **dadurch gekennzeichnet, dass** die Fassung (2) eine Auflageseite (42) der Kerbe (23) umfasst, die der Öffnungsseite (231) zugewandt ist, und wobei die Schulter (31) kegelförmig ist und einen Winkel zur Achse des Endstücks (1) bildet, der größer ist als der Winkel zwischen der Achse der Fassung (2) und der Auflageseite (42), wobei sich die Achse des Endstücks (1) und diejenige der Fassung (2) decken.

2. System nach Anspruch 1, wobei die Schulter (31) aus einer kreisrunden Kehle (17) hervorgeht, in der der Stift (321) in Verriegelungsposition aufgenommen ist.

3. System nach einem der Ansprüche 1 bis 2, wobei das Endstück (1) eine Eintrittsfläche (14) von kegelförmiger oder flacher Ringform aufweist, um den Stift (321) beim Einstecken der Fassung (2) am Endstück (1) zu spreizen, wobei die Öffnungsseite (231) im Wesentlichen zu einer Mantellinie der Eintrittsfläche (14) in einer axialen Ebene senkrecht zur Öffnungsseite (231) senkrecht ist.

4. System nach einem der Ansprüche 1 bis 3, wobei die Auflageseite (42) im Wesentlichen zur Öffnungsseite (231) parallel ist.

5. System nach Anspruch 4, wobei die Entriegelungsmittel (4) von der Auflageseite (42) und von einem Hebel (41) gebildet werden, der den Stift (321) verlängert und von der Fassung (2) vorsteht, um gegriffen werden zu können.

6. System nach Anspruch 5, wobei sich der Hebel (41) in einer Richtung parallel zur Achse der Fassung (2) längs derselben erstreckt und durch Auflegen an der Außenseite der Fassung (2) die axiale Bewegung des Stifts (321) begrenzt.

7. System nach Anspruch 5 oder 6, wobei die Entriegelungsmittel (4) dem Hebel (41) zugewandt längs der Auflageseite (42) eine Schräge (43) umfassen, die derart angeordnet ist, dass eine dem Hebel (41) entgegengesetzte Zugkraft auf den Stift (321) das Gleiten des Hebels (41) auf der Schräge (43) und das Entfernen des Stifts (321) in Bezug auf die Achse der Fassung (2) bewirkt.

8. System nach einem der Ansprüche 1 bis 7, wobei das Halteelement (32) zwei Stifte (321) umfasst, wobei die elastischen Rückstellmittel von einer Schlaufe (322) gebildet werden, die aus ein und demselben Draht wie die Stifte (321) hervorgeht und die Stifte (321) derart miteinander verbindet, dass das Halteelement (32) eine Zange bildet.

9. System nach Anspruch 8, wobei sich die Schlaufe (322) in einer Ebene parallel zur Achse der Fassung (2) erstreckt.

## Claims

1. System for fluid connection, comprising a male tip (1) and a female socket (2) capable of being connected in a sealed manner onto the tip (1) by a translation along an axis of the socket (2), the system comprising retention means (3) for maintaining the socket (2) on the tip (1) by snapping on, the retention means (3) comprising a shoulder (31) made on the tip (1), a retention element (32) carried by the socket (2) and capable of being housed against the shoulder (31) in such a way as to hinder the extraction of the socket (2) from the tip (1) in a locking position, and unlocking means (4) for freeing the socket (2) from the tip (1) by removing the retention element (32) from the shoulder (31), the retention element (32) comprising at least one pin (321) extending in a direction perpendicular to the axis of the socket (2) in a notch (23) of the socket (2) having an opening face (231) inclined with respect to the axis of the socket (2) in such a direction that the pin (321), sliding on the opening face (231), moves away from the front end of the socket (2) while moving away from the axis of the socket (2), the pin (321) being capable of being housed against the shoulder (31) of the tip (1), the retention element (32) further comprising means (322) for elastic return of the pin (321) that tend to move the pin (321) towards the axis of the socket (2) **characterised in that** the socket (2) comprises a bearing face (42) of the notch (23), facing the opening face (231) and in which the shoulder (31) is conical and forms an angle with the axis of the tip (1) greater than the angle between the axis of the socket (2) and the bearing face (42), the axis of the tip (1) and that of the socket (2) being the same.

2. System according to claim 1, wherein the shoulder (31) comes from a circular groove (17) in which the pin (321) is housed in the locking position.

3. System according to one of claims 1 to 2, wherein the tip (1) comprises an inlet surface (14) having a conical shape or in the form of a flat ring in order to move the pin (321) away during the insertion of the socket (2) onto the tip (1), the opening face (231) being substantially perpendicular to a generatrix of the inlet surface (14) in an axial plane perpendicular to the opening face (231).

4. System according to one of claims 1 to 3, in which the bearing face (42) is substantially parallel to the opening face (231).

5. System according to claim 4, in which the unlocking means (4) are formed by the bearing face (42) and by a lever (41) extending the pin (321) and protruding from the socket (2) in order to be able to be gripped.

6. System according to claim 5, in which the lever (41) extends in a direction parallel to the axis of the socket (2) along the latter and limits the axial movement of the pin (321) by bearing on the outside of the socket (2).

7. System according to claim 5 or 6, in which the unlocking means (4) comprise a ramp (43) along the bearing face (42) facing the lever (41) disposed in such a way that a traction on the pin (321) opposite to the lever (41) causes the sliding of the lever (41) on the ramp (43) and the movement of the pin (321) away from the axis of the socket (2).

8. System according to one of claims 1 to 7, in which the retention element (32) comprises two pins (321), the elastic return means being formed by a loop (322) coming from the same wire as the pins (321) and connecting the pins (321) to each other, in such a way that the retention element (32) forms a clip.

9. System according to claim 8, in which the loop (322) extends in a plane parallel to the axis of the socket (2).
